# EUROPÄISCHE PATENTSCHRIFT

(11) **EP 2 910 800 B1**
(45) Veröffentlichungstag und Bekanntmachung des Hinweises auf die Patenterteilung: **26.09.2018**
(21) Anmeldenummer: 15154706.4
(22) Anmeldetag: 11.02.2015
(51) Int. Cl.: F16B 15/02, F16B 45/00, F16B 5/01

(54) **Befestigungsmittel für das Aufhängen von Schallabsorbern und Schallabsorbersystem**
Attachment means for the suspension of sound absorbers and sound absorber system
Moyen de fixation pour la suspension d'isolants acoustiques et système d'isolant acoustique

(30) Priorität: 20.02.2014 DE 102014102162
(43) Veröffentlichungstag der Anmeldung: 26.08.2015
(73) Patentinhaber: MM Infra GmbH & Co. KG, 52249 Eschweiler (DE)
(72) Erfinder: Mathey, Michael, 52249 Eschweiler (DE)
(74) Vertreter: Kohlmann, Kai

(56) Entgegenhaltungen:
- WO-A1-2010/006413
- DE-A1- 3 422 841
- DE-U1- 20 011 448
- JP-U- H03 102 610

## Beschreibung

Die Erfindung betrifft ein Befestigungsmittel für das Aufhängen von Schallabsorbern aus einem zelligen elastomeren Schaumstoff sowie ein Schallabsorbersystem, das mehrere derartige Schallabsorber umfasst.

Schallabsorber aus zelligem elastomeren Schaumstoff sind beispielsweise aus der EP 2 180 109 A2 bekannt. Die Schallabsorber dienen bei hängender Anordnung an einer Raumdecke der Schallabsorption. Zur Schallabsorption kommen insbesondere im Querschnitt lang gestreckte, rechteckige Schaumstoffteile zum Einsatz, die in parallelen Reihen zueinander angeordnet sind. Jedes Schaumstoffteil weist einem lang gestreckt rechteckigen Querschnitt auf, wobei der längere Schenkel des Querschnitts die senkrecht zur Raumdecke betrachtete Höhe des Schaumstoffteils definiert. Zur Befestigung der Schaumstoffteile sind an der Raumdecke Befestigungsschienen montiert, die einen U-Querschnitt aufweisen. Der die U-Stege verbindende U-Schenkel dient zur Festlegung der Befestigungsschiene an der Raumdecke. Die parallel zueinander verlaufenden U-Stege sind mit einem dem Dickenmaß des Schaumstoffteils entsprechenden Maß zueinander beabstandet, so dass nach einem Einstecken des Schaumstoffteils in die Befestigungsschiene das Schaumstoffteil mittels der U-Stege der Befestigungsschiene klemmgehaltert ist.

Neben dieser Klemmhalterung für Schallabsorber hat die Firma Pinta acoustic GmbH in einem Prospekt "pinter Absorber RONDO", Stand 01/2011 einen zylindrischen Schallabsorber auszelligem elastomeren Schaumstoff offenbart, der stirnseitig ein vormontiertes Befestigungsmittel in Form einer Spiralfeder mit einem endseitig ausgebildeten Haken für eine vertikale Aufhängung aufweist. Die Aufhängung erfolgt an einem in dem Raum aufgespannten Seil. Die Schallabsorber mit den vormontierten Spiralfedern werden vor dem Aufspannen auf das Seil geschoben bzw. an dem Seil aufgehängt.

Eine exakte Montage der Spiralfedern in den Schallabsorbern ist aufgrund des helixförmigen Eindringens des Befestigungselementes problematisch. Insbesondere besteht die Gefahr, dass die Spiralfeder beim Einschrauben in den zelligen elastomeren Schaumstoff aus einer vorgegebenen Achse herausläuft. Darüber hinaus ist die Einhaltung der stets gleichen Einschraubtiefe der bekannten Spiralfeder problematisch. Die Position und Ausrichtung der Spiralfeder divergiert daher häufig bei im übrigen baugleichen Absorbern, die in das Seil eingehängt werden sollen. Eine rasche und exakte Verankerung der Befestigungselemente in den Schallabsorbern ist daher kaum möglich.

Damit die Montagetoleranzen der Spiralfedern in den Schallabsorbern nicht störend in Erscheinung treten, wurden diese bisher lediglich an der zur Decke weisenden Stirnseite jedes Schallabsorbers montiert und waren dadurch dem Blick des Betrachters weitgehend entzogen. Hierdurch bedingt eignen sich die bekannten Spiralfedern lediglich für eine vertikale Aufhängung der Schallabsorber an dem Seil. Trotz der vertikalen Aufhängung lassen sich aufgrund der kaum vermeidbaren Montagetoleranzen auch bei baugleichen Schallabsorbern sichtbare Höhenunterschiede zwischen den unteren Stirnseiten der Schallabsorber praktisch nicht vermeiden.

Die DE 200 11 448 U1 offenbart ein Schallabsorbersystem umfassend mehrere Schallabsorber, die an mindestens einem im Raum aufgespannten Seil aufgehängt sind. Als Befestigungsmittel für die Schallabsorber kommen die erwähnten Spiralfedern mit einem endseitig ausgebildeten Haken zum Einsatz. Diese Befestigung von Schallabsorbern aus zelligem elastomeren Schaumstoff weist jedoch eine Reihe von Nachteilen auf. Insbesondere ist eine exakte Montage der Spiralfeder in den Schallabsorbern aufgrund des helixförmigen Eindringens problematisch. Es besteht die Gefahr, dass die Spiralfeder beim Einschrauben in den Schaumstoff aus einer vorgegebenen Achse herausläuft. Die Ausrichtung der Spiralfeder bei im Übrigen baugleichen Absorbern, die in das Seil eingehängt werden, kann daher divergieren. Infolgedessen offenbart die DE 200 11 448 U1 ausschließlich, dass die Spiralfedern an der zur Decke weisenden Stirnseite des Schallabsorbers montiert werden und dadurch dem Blick des Betrachters, insbesondere bei nicht exakter Montage entzogen sind. Höhenunterschiede der aufgehängten Schallabsorber lassen sich mit den bekannten Befestigungsmitteln nicht vermeiden.

Aus der WO 2010/006413 A1 ist ein Befestigungsmittel zur Befestigung von Gegenständen an Wänden bekannt, welches einen zylindrischen Schaft zur Verankerung des Befestigungsmittels in der Wand aufweist. In Richtung der sich kegelförmig verjüngenden Spitze ist der Schaft mit einer Strukturierung versehen, um die Verankerung des Befestigungsmittels in der Wand zu verbessern. Am anderen Ende weist das Befestigungsmittel einen an dem Schaft angebrachten Kunststoffkopf (6) auf, der an der Wand zur Anlage gelangt.

Die DE 34 22 841 A1 betrifft einen Hakennagel mit einer Verdrehsicherung am Schaft, wie sie insbesondere an Pflöcken im Weinbau benötigt werden. Zur Verdrehsicherung sind am Einschlagende des aus Runddraht bestehenden Nagelschaftes mehrere Flachstege ausgebildet.

Ausgehend von diesem Stand der Technik liegt der Erfindung die Aufgabe zu Grunde, ein Befestigungsmittel für das Aufhängen von selbsttragenden Schallabsorbern aus zelligem elastomeren Schaumstoff zu schaffen, das eine rasche und positionsgenaue Verankerung des Befestigungsmittels in dem Schallabsorber ermöglicht.

Außerdem soll ein Schallabsorber unter Verwendung der Befestigungsmittel vorgeschlagen werden.

Schließlich soll ein Schallabsorbersystem unter Verwendung der Befestigungsmittel vorgeschlagen werden, das weitgehend unabhängig von der Geometrie der Schallabsorber auch eine nicht senkrechte Ausrichtung der aufgehängten Schallabsorber ermöglicht, ohne dass das Gesamtbild des Schallabsorbersystems beeinträchtigt wird.

Im Einzelnen wird die Aufgabe bei einem Befestigungsmittel für das Aufhängen von Schallabsorbern aus zelligem elastomeren Schaumstoff dadurch gelöst, dass das Befestigungsmittel einen zylindrischen Schaft zur Verankerung des Befestigungsmittels in dem zelligen elastomeren Schaumstoff des Schallabsorbers aufweist, der Schaft sich an einem Ende kegelförmig in Richtung einer Eintreibspitze verjüngt, in den Umfang des Schafts mindestens eine Vertiefung eingebracht ist, die mindestens eine Vertiefung in jedem Befestigungsmittel derart eingerichtet ist, dass sich der zellige elastomere Schaumstoff aufgrund von Rückstellkräften in die mindestens eine Vertiefung setzt und damit das Befestigungsmittel in dem zelligen elastomeren Schaumstoff verankert, das Befestigungsmittel einen Halteabschnitt zum Aufhängen des Schallabsorbers aufweist, der an dem anderen Ende des Schaftes angeordnet ist, zwischen dem Schaft und dem Halteabschnitt ein Anschlag angeordnet ist, der an der Oberfläche des Schallabsorbers zur Anlage bringbar ist und sich mindestens eine Finne parallel zur Längsachse des Schafts radial über dessen Mantelfläche hinaus nach außen erstreckt.

Ein Schallabsorber aus zelligem elastomeren Schaumstoff, wobei in den Schallabsorber mindestens ein Befestigungsmittel nach einem oder mehreren der Ansprüche 1 bis 7 eingebracht ist, ergibt sich aus den Merkmalen des Anspruchs 8.

Schallabsorbersysteme unter Verwendung des erfindungsgemäßen Befestigungsmittels ergeben sich aus den Merkmalen der Ansprüche 91 und 10.

Die Funktion und Wirkungsweise sowie die Vorteile des Befestigungsmittels gemäß einem oder mehreren der Ansprüche 1 bis 7 im Zusammenwirken mit einem Schallabsorber aus zelligem elastomeren Schaum wird nachfolgend erläutert:
Indem der Schaft sich an einem Ende kegelförmig in Richtung der Eintreibspitze verjüngt, wird der Schaumstoff beim Eintreiben des Befestigungsmittels nur minimal verletzt. Nahezu die gesamte Rückstellkraft des weitgehend unbeschädigten zelligen elastomeren Schaumstoffs übt eine Klemmwirkung auf den Schaft des Befestigungsmittels aus. Zugleich bewirkt die Rückstellkraft, dass sich der zellige elastomere Schaumstoff in die mindestens eine Vertiefung setzt und damit das Befestigungsmittel in dem zelligen elastomeren Schaumstoff verankert. Die Vertiefung ist insbesondere als Nut ausgebildet und erstreckt sich in Längsrichtung des zylindrischen Schafts. Der Querschnitt der Nut weist vorzugsweise die Form eines Kreissektors auf. Diese Querschnittsform begünstigt, dass der Schaumstoff die Nut vollständig ausfüllt und das Befestigungsmittel in dem Schaumstoff wirksam verankert. In Betracht kommen jedoch auch grundsätzlich anders geformte Nutquerschnitte, insbesondere ein rechteckiger Querschnitt. Vorzugsweise sind in einem ersten Abstand zu dem Anschlag über den Umfang des Schaftes mehrere als Nut ausgebildete Vertiefungen angeordnet, die sich parallel zueinander in Längsrichtung des Schafts erstrecken. Zur weiteren Verbesserung der Verankerung können in mindestens einem zweiten, von dem ersten Abstand verschiedenen Abstand zu dem Anschlag über den Umfang des Schaftes mehrere als Nut ausgebildete Vertiefungen angeordnet sein, die sich parallel zueinander in Längsrichtung des Schafts erstrecken.

Der an der Oberfläche des Absorbers aus zelligem elastomeren Schaumstoff zur Anlage bringbare Anschlag begrenzt den Eindringweg des Befestigungsmittels in den zelligen elastomeren Schaumstoff und trägt damit ebenfalls zur genauen und wiederholbaren Positionierung des Befestigungsmittels in den Schallabsorbern bei.

In Verbindung mit dem geradlinigen Eintreibweg des zylindrischen Schafts in den zelligen elastomeren Schaumstoff lässt sich eine stets gleiche, exakte Positionierung der Befestigungsmittel in den Schallabsorbern gewährleisten, so dass optisch einwandfreie Schallabsorbersysteme mit nahezu beliebigen Geometrien der aufgehängten Schallabsorber realisiert werden können. Insbesondere lassen sich die erfindungsgemäßen Befestigungsmittel auch in sichtbaren Bereichen der Schallabsorber anbringen, ohne dass diese aufgrund von Montagetoleranzen in einem mehrere Schallabsorber umfassenden Schallabsorbersystem störend in Erscheinung treten.

Im Interesse einer möglichst geringen Verletzung des zelligen elastomeren Schaumstoffs beim Eintreiben des Befestigungsmittels ist der Öffnungswinkel des die Eintreibspitze umfassenden Kegels ein spitzer Winkel.

Herstellungstechnisch wird die mindestens eine Vertiefung in dem Schaft jedes Befestigungsmittels im Wege des Umformens, insbesondere des Druckumformens des Schaftes ausgebildet. Vorzugsweise wird durch das Umformen das aus der Vertiefung verdrängte Material zu einer an die Vertiefung angrenzenden Finne (plattenförmiger Abschnitt) umgeformt, die sich parallel zur Längsachse des Schaftes radial über deren Mantelfläche hinaus nach außen erstreckt. Die Finne erschwert ein Verdrehen des in dem zelligen elastomeren Schaumstoff verankerten Schaftes.

Die Verankerung des Befestigungsmittels in dem zelligen elastomeren Schaumstoff kann weiter dadurch erhöht werden, dass die Oberfläche des Schaftes zumindest teilweise eine reibungserhöhende Strukturierung aufweist.

Um die Hebelkräfte durch den Schaft des Befestigungsmittels in dem zelligen elastomeren Schaumstoff des Schallabsorbers, insbesondere bei dessen horizontaler Aufhängung zu reduzieren, ist in vorteilhafter Ausgestaltung der Erfindung die Längserstreckung des Schaftes größer als die Längserstreckung des Halteabschnitts. Insbesondere weist der Schaft eine Mindestlänge von 80 mm, vorzugsweise von 100 mm auf. Die bevorzugte Mindestlänge des Schafts führt zudem zu einer mechanischen Stabilisierung des Schallabsorbers. Die Aussteifung des Schallabsorbers, insbesondere durch die Schäfte mehrerer an gegenüberliegenden Stirnseiten in den Schallabsorber eingebrachten Befestigungsmitteln, erlaubt eine horizontale Aufhängung relativ dünner plattenförmiger Schallabsorber.

Um die Aufhängung der Schallabsorber in einem mindestens ein aufgespanntes Seil umfassenden Schallabsorbersystem zu erleichtern, ist der Halteabschnitt endseitig als einseitig offener Haken ausgebildet, der nach dem Aufspannen des Seils unproblematisch eingehängt werden kann. Sind die Absorber indes mit Befestigungsmitteln versehen, deren Halteabschnitte endseitig eine geschlossene Öse bilden, müssen die Ösen der Befestigungsmittel zuvor auf das Seil geschoben werden, was einen höheren Montageaufwand zur Folge hat.

Der den Eindringweg des Befestigungsmittels begrenzende Anschlag ist vorzugsweise als Platte ausgebildet. Die Plattenebene ist senkrecht zur Längserstreckung des Schaftes. Die Platte erlaubt eine insbesondere vollflächige Anlage an der Oberfläche des Schallabsorbers und dadurch eine geringe Kompression des zelligen elastomeren Schaumstoffs. Sofern das Befestigungsmittel im Sichtbereich des Schallabsorbers montiert wird, ist die Platte aus optischen Gründen vorzugsweise kreisrund, wobei die Längsachse des Schaftes durch den Kreismittelpunkt verläuft. Die kreisförmige Platte hat zudem eine gleichmäßige Verteilung und Einleitung der Kräfte des Anschlags in den Schaumstoff zur Folge.

Ein erfindungsgemäßes Schallabsorbersystem umfasst mehrere, vorzugsweise baugleiche Schallabsorber aus zelligem elastomeren Schaumstoff, wobei in jeden Schallabsorber mindestens ein erfindungsgemäßes Befestigungsmittel eingebracht ist und mindestens ein in einem Raum aufgespanntes Seil, wobei der Halteabschnitt jedes Befestigungsmittels in das Seil oder eines der Seile eingehängt ist. Sofern baugleiche Befestigungsmittel an baugleichen Schallabsorbern an übereinstimmenden Stellen und in gleicher Ausrichtung eingebracht werden, ist bei einem erfindungsgemäßen Schallabsorbersystem eine stets gleiche, optisch einwandfreie Positionierung der Schallabsorber in Bezug auf das Seilsystem gewährleistet.

Für eine nicht vertikale Aufhängung der mehreren Schallabsorber in einem Raum ist ein Schallabsorbersystem mit den Merkmalen des Anspruchs 12 besonders geeignet. An jedem Schallabsorber sind mindestens ein erstes Befestigungsmittel und mindestens ein zweites erfindungsgemäßes Befestigungsmittel montiert. Der Halteabschnitt jedes ersten Befestigungsmittels ist in ein erstes Seil und der Halteabschnitt jedes zweiten Befestigungsmittels ist in ein zweites Seil eines Seilpaares eingehängt, wobei die Seile parallel und im Abstand zueinander aufgespannt sind.

Für eine horizontale Aufhängung mehrerer, insbesondere flächig ausgebildeter Schallabsorber an einem Seilpaar, sind das erste und das zweite Seil des Seilpaares in einer horizontalen Ebene angeordnet.

Die Schallabsorber sind vorzugsweise zylindrisch ausgebildet und weisen eine Grund- und Deckfläche mit rundem, ovalem oder rechteckigem Querschnitt auf. Im letztgenannten Fall handelt es sich insbesondere um einen lang gestreckten, rechteckigen Querschnitt.

Bei zylindrischen Schallabsorbern, die an einem Seilpaar aufgehängt werden, sind vorzugsweise jedes erste Befestigungsmittel in die Grundfläche und jedes zweite Befestigungsmittel in die Deckfläche des Zylinders eingebracht. Die ebenen Stirnflächen (Grund-/Deckfläche) des zylinderförmigen Schallabsorbers erlauben eine exakte Anlage des insbesondere plattenförmigen Anschlags jedes Befestigungsmittels. Des Weiteren lassen sich die Befestigungsmittel auf den beiden gegenüberliegenden Stirnflächen des Schallabsorbers fluchtend miteinander senkrecht zur Oberfläche eintreiben, wodurch eine gleichförmige Ausrichtung der in einem Seilpaar eingehängten Schallabsorber gewährleistet ist.

Alternativ können bei zylindrischen Schallabsorbern, die in einem Schallabsorbersystem mit mindestens einem Seilpaar aufgehängt werden, jedes erste und jedes zweite Befestigungsmittel in die Grundfläche oder die Deckfläche des Zylinders eingebracht sein. Die ebenen Stirnflächen des zylinderförmigen Schallabsorbers erlauben eine exakte Anlage des insbesondere plattenförmigen Anschlags jedes Befestigungsmittels.

Ein erfindungsgemäßes Schallabsorbersystem lässt sich preiswert ausführen, wenn sämtliche Schallabsorber ausschließlich aus einem offenzelligen oder geschlossenzelligen elastomeren Schaumstoff bestehen. Die rahmenlosen, formstabilen Schallabsorber werden durch die Befestigungsmittel an dem bzw. den Seilen des Schallabsorbersystems gehaltert.

Der zellige elastomere Schaumstoff des Schallabsorbers vermindert die Schallenergie durch Umwandlung in Wärme. Durch die rahmenlose Bauweise steht nahezu die vollständige Oberfläche des Schallabsorbers für die Schallabsorption zur Verfügung. Als zellige elastomere Schaumstoffe kommen insbesondere so genannte Akustikschäume mit einem hohen Schallabsorptionsgrad in Betracht. Vorzugsweise handelt es sich um einen Melaninharzschaumstoff mit den Merkmalen des Anspruchs 18 oder einen PUR-Schaumstoff mit den Merkmalen des Anspruchs 19. Ferner können grundsätzlich auch Polyethylenschaumstoffe zur Anwendung gelangen. Die für die Formstabilität der rahmenlosen Schallabsorber maßgebliche Stauchhärte 40 % wird nach DIN 53577 bestimmt. Die Stauchhärte bzw. Festigkeit des Schaumstoffs ist darüber hinaus für die Klemmung der eingetriebenen Befestigungsmittel in dem Schallabsorber verantwortlich.

Die erfindungsgemäßen Befestigungselemente bestehen vorzugsweise aus metallischen Werkstoffen, wie insbesondere Stahl, Edelstahl, Messing und anderen Buntmetalllegierungen. Grundsätzlich kommen jedoch auch Kunststoff oder Verbundmaterialien als Material für die Befestigungsmittel in Betracht.

Nachfolgend wird die Erfindung anhand der Zeichnungen näher erläutert. Es zeigen:
- **Figur 1**: eine Seiten- und eine Stirnansicht eines erfindungsgemäßen Befestigungsmittels,
- **Figur 2**: ein erstes Ausführungsbeispiel eines Schallabsorbersystems mit an den seitlichen Stirnflächen des Schallabsorbers angeordneten Befestigungsmitteln sowie
- **Figur 3**: ein zweites Ausführungsbeispiel eines Schallabsorbersystems mit lediglich an einer Stirnfläche des Schallabsorbers angeordneten Befestigungsmitteln.

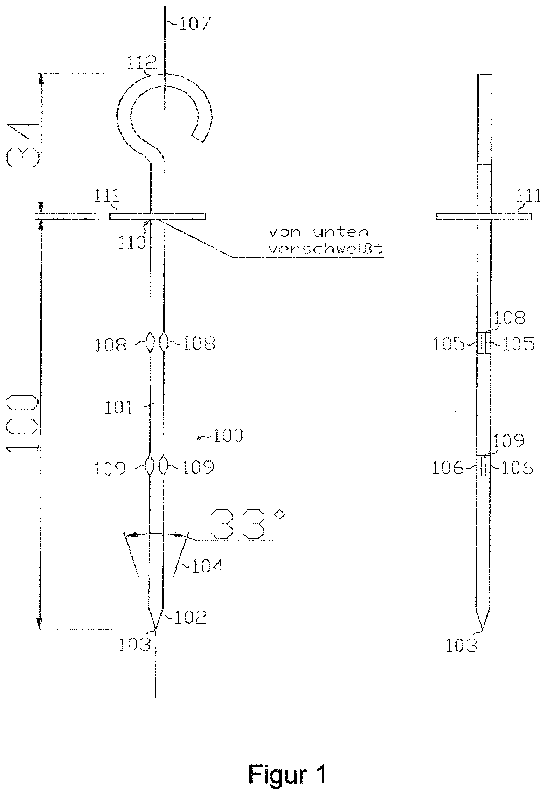

Figur 1 zeigt ein erfindungsgemäßes Befestigungsmittel (100) für das Aufhängen von Schallabsorbern (200) aus zelligem elastomeren Schaumstoff. Das Befestigungsmittel (100) weist einen zylindrischen Schaft (101) zur Verankerung des Befestigungsmittels (100) in dem Schallabsorber (200) auf. An seinem unteren Ende (102) verjüngt sich der Schaft (101) kegelförmig in Richtung einer Eintreibspitze (103). Der Öffnungswinkel (104) des die Eintreibspitze (103) umfassenden Kegels ist ein spitzer Winkel von weniger als 45 Grad. Durch den relativ kleinen spitzen Winkel wird die Zerstörung des zelligen elastomeren Schaumstoffs beim Eintreiben des Befestigungsmittels (100) auf ein Minimum reduziert.

In den Umfang des Schafts (101) sind durch Umformen des metallischen Schaftes (101) an zwei Positionen Vertiefungen (105, 106) eingebracht. Parallel zur Längsachse (107) des Schaftes (101) erstrecken sich sowohl in der unteren als auch der oberen Position unmittelbar benachbart zu den Vertiefungen (105, 106) jeweils zwei Finnen (108, 109) parallel zur Längsachse (107) des Schafts (101) radial über deren Mantelfläche hinaus nach außen.

Am oberen Ende (110) des Schafts (101) ist ein Anschlag (111) in Form einer kreiszylindrischen Platte an dem Schaft angeschweißt, wobei die Längsachse (107) des Schafts (101) durch den Kreismittelpunkt der Platte verläuft. Beim Eintreiben des zylindrischen Schafts (101) des Befestigungsmittels (100) in den zelligen elastomeren Schaumstoff gelangt die nach unten weisende Oberfläche des plattenförmigen Anschlags (111) an der Oberfläche des zelligen elastomeren Schaumstoffs zur Anlage und begrenzt dadurch den Eintreibweg des Befestigungsmittels (100) derart, dass der Schaft (101) vollständig in dem zelligen elastomeren Schaumstoff steckt.

Getrennt durch den plattenförmigen Anschlag (111) ist in Verlängerung des Schaftes (101) an dem oberen Ende (110) ein Halteabschnitt (112) zum Aufhängen des Schallabsorbers (200) angeordnet. Der Halteabschnitt (112) ist endseitig als einseitig offener Haken ausgebildet.

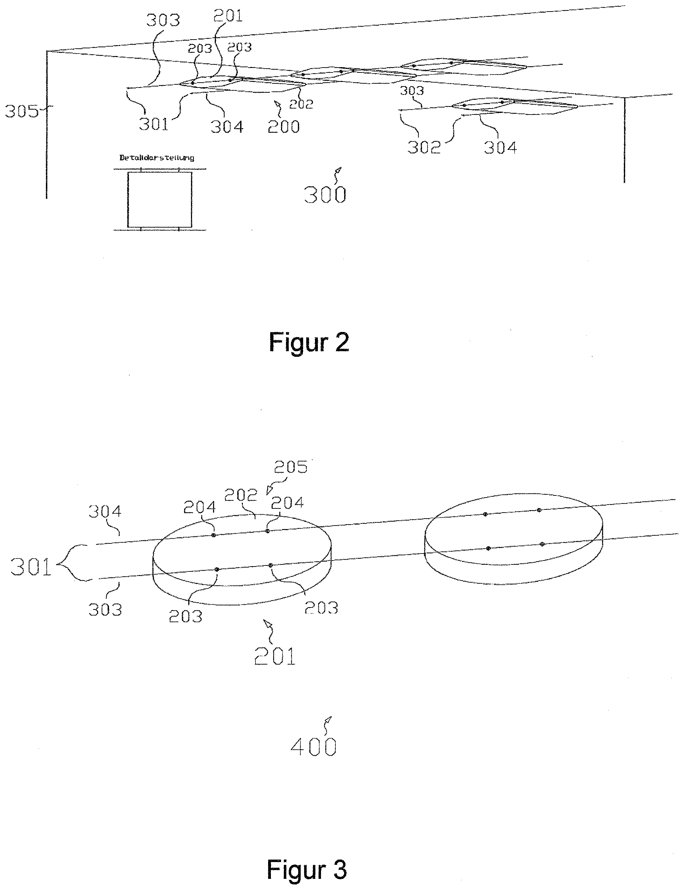

Aus der exemplarisch in Figur 1 eingefügten Bemaßung des Befestigungsmittels (100) ist erkennbar, dass die Längserstreckung des Schafts von 100 mm etwa dreimal so groß wie die Längserstreckung des Halteabschnitts (112) von 34 mm ist. Hierdurch werden die durch den Halteabschnitt (112) in den Schaft (101) eingeleiteten Hebelkräfte, insbesondere bei horizontaler Aufhängung des Schallabsorbers (200), wie in Figur 2 dargestellt, reduziert. Des Weiteren wird über die große Länge des Schaftes (101) eine hohe Klemmwirkung des zelligen elastomeren Schaumstoffs auf den Schaft ausgeübt. Die Verankerung des Schaftes wird weiter dadurch verbessert, dass sich der zellige elastomere Schaumstoff aufgrund der Rückstellkräfte in die Vertiefungen (105/106) setzt. Schließlich werden die Rückstellkräfte des zelligen elastomeren Schaumstoffs durch die kegelförmige Verjüngung in Richtung der Eintreibspitze (103) lediglich minimal beeinträchtigt. Das Zusammenwirken aus zylindrischem Schaft (101), Vertiefungen (105/106) und minimal verletzender Eintreibspitze (103) erlaubt ein positionsgenaues, rasches Verankern des Befestigungsmittels mit ausreichender Klemmkraft, um die von dem Schallabsorber ausgehenden Kräfte aufzunehmen. Die Länge des Schaftes (101) stabilisiert darüber hinaus insbesondere plattenförmige Schallabsorber und ermöglicht deren horizontale Aufhängung (vgl. Figur 2).

Das Eintreiben des erfindungsgemäßen Befestigungsmittels (100) in den zelligen elastomeren Schaumstoff lässt sich aufgrund des linearen Eintreibwegs unproblematisch an beliebigen Positionen des Schallabsorbers (200) automatisieren.

Figur 2 zeigt ein Schallabsorbersystem (300) umfassend zwei Seilpaare (301, 302), wobei jeweils ein erstes und ein zweites Seil (303, 304) in einer horizontalen Ebene angeordnet sind. Das erste und zweite Seil (303, 304) jedes Seilpaares (301, 302) sind im Abstand zueinander in einem Raum (305) aufgespannt, der in etwa der Länge des zylindrischen Schallabsorbers (200) zwischen der Grund- und der Deckfläche entspricht. In die Grundfläche (201) jedes Schallabsorbers (200) sind zwei erste Befestigungsmittel (203) entsprechend dem Befestigungsmittel (100) nach Figur 1 eingebracht. In die gegenüberliegende Deckfläche (202) des Schallabsorbers (200) sind zwei zweite Befestigungsmittel (204) entsprechend dem Befestigungsmittel (100) fluchtend zu den ersten Befestigungsmitteln (203) eingebracht. Die Halteabschnitte (112) jedes ersten Befestigungsmittels (203) sind in das erste Seil (303) und die Halteabschnitte der beiden zweiten Befestigungsmittel (204) in das zweite Seil (304) eingehängt. Die Längsachse (107) des Schaftes (101) jedes ersten und jedes zweiten Befestigungsmittels (203, 204) verläuft senkrecht zu der Grund- bzw. Deckfläche (201, 202) jedes Schallabsorbers (200). Hierdurch kommt es zu einer Stabilisierung der horizontal zwischen den Seilen (303, 304) aufgehängten Schallabsorber (200).

Das in Figur 3 teilweise dargestellte Schallabsorbersystem (400) weist ebenfalls zylindrische Schallabsorber (205) auf, deren Längserstreckung zwischen der Grund- und Deckfläche (201, 202) erheblich geringer als bei dem Schallabsorber (200) nach Figur 2 ist. Des Weiteren sind die Grund- und Deckflächen (201, 202) nicht senkrecht, sondern horizontal im Raum (305) ausgerichtet.

Die ersten und zweiten Befestigungsmittel (203, 204) sind sämtlich in die Deckfläche (202) des zylindrischen Schallabsorbers (205) eingebracht. Die Halteabschnitte (112) der beiden ersten Befestigungsmittel (203) sind in das erste Seil (303) und die Halteabschnitte (112) der beiden zweiten Befestigungsmittel (204) sind in das zweite Seil (304) des Seilpaares (301) eingehängt.

Ein mit dem Schallabsorbersystem (400) vergleichbares Schallabsorbersystem mit Schallabsorbern, die zwischen der Grund- und Deckfläche (202/203) eine größere Längserstreckung aufweisen, lassen sich auch mit lediglich einem im Raum aufgespannten Seil aufhängen. In diesem Fall ist im Mittelpunkt der kreisförmigen Deckfläche (202) das Befestigungsmittel mit senkrecht nach unten weisendem Schaft (101) eingebracht und wird an dem in dem Raum (305) aufgespannten Seil eingehängt.

Selbstverständlich liegt es im Rahmen der Erfindung Schallabsorbersysteme mit Schallabsorbern unterschiedlichster Form und mit unterschiedlicher Anzahl an Seilen bzw. Seilpaaren aufzubauen. Insbesondere sind von der Erfindung Schallabsorbersysteme umfasst, bei denen das zweite Seil eines Seilpaares das erste Seilpaares eines benachbarten Seilpaares ist. Die Schallabsorber müssen dann versetzt zueinander in die benachbarten Seilpaare eingehängt werden.

Außerdem sind von der Erfindung solche Schallabsorbersysteme umfasst, bei denen zwischen den Seilen eines Seilpaares oder an einem einzelnen Seil unterschiedlich geformte Schallabsorber eingehängt sind.

Schließlich müssen die Seile in dem Raum nicht zwingend in einer horizontalen Ebene angeordnet sein. Um ein Verrutschen der Schallabsorber entlang nicht horizontal aufgespannter Seile zu verhindern, sind diese mit Stoppern und/oder Abstandshaltern zwischen den Schallabsorbern ausgerüstet, an denen die Halteabschnitte (112) der Befestigungsmittel (100) zur Anlage gelangen.

Sofern das aufgespannte Seil eine bestimmte Länge, beispielsweise von fünf Metern, übersteigt, kann eine zusätzliche Abhängung mit einer Seildurchführung an der Decke montiert werden. Das Spannen der Seile erfolgt mit an sich bekannten Seilspannern.

### Bezugszeichenliste

| **Nr.** | **Bezeichnung** |
|---|---|
| **100** | Befestigungsmittel |
| 101 | Schaft |
| 102 | unteres Ende |
| 103 | Eintreibspitze |
| 104 | Öffnungswinkel |
| 105/106 | Vertiefungen |
| 107 | Längsachse |
| 108/109 | Finnen |
| 110 | oberes Ende |
| 111 | Anschlag |
| 112 | Halteabschnitt |
| | |
| **200** | Schallabsorber |
| 201 | Grundfläche |
| 202 | Deckfläche |
| 203 | erste Befestigungsmittel |
| 204 | zweite Befestigungsmittel |
| 205 | Schallabsorber |
| | |
| **300** | Schallabsorbersystem |
| 301/302 | Seilpaar |
| 303 | erstes Seil |
| 304 | zweites Seil |
| 305 | Raum |
| | |
| **400** | Schallabsorbersystem |

## Patentansprüche

1. Befestigungsmittel (100) eingerichtet für das Aufhängen von Schallabsorbern (200/205) aus zelligem elastomeren Schaumstoff, **dadurch gekennzeichnet, dass**
- das Befestigungsmittel (100) einen zylindrischen Schaft (101) zur Verankerung des Befestigungsmittels (100) in dem zelligen elastomeren Schaumstoff des Schallabsorbers (200/300) aufweist,
- der Schaft (101) sich an einem Ende (102) kegelförmig in Richtung einer Eintreibspitze (103) verjüngt,
- in den Umfang des Schafts (101) mindestens eine Vertiefung (105/106) eingebracht ist,
- die mindestens eine Vertiefung (105/106) in jedem Befestigungsmittel derart eingerichtet ist, dass sich der zellige elastomere Schaumstoff aufgrund von Rückstellkräften in die mindestens eine Vertiefung setzt und damit das Befestigungsmittel in dem zelligen elastomeren Schaumstoff verankert,
- das Befestigungsmittel (100) einen Halteabschnitt (112) zum Aufhängen des Schallabsorbers aufweist, der an dem anderen Ende (110) des Schaftes (101) angeordnet ist,
- zwischen dem Schaft (101) und dem Halteabschnitt (112) ein Anschlag (111) angeordnet ist, der an der Oberfläche des Schallabsorbers (200/205) zur Anlage bringbar ist, und
- sich mindestens eine Finne (108/109) parallel zur Längsachse (107) des Schafts (101) radial über dessen Mantelfläche hinaus nach außen erstreckt.

2. Befestigungsmittel nach Anspruch 1, **dadurch gekennzeichnet, dass** der Öffnungswinkel (104) des die Eintreibspitze (103) umfassenden Kegels ein spitzer Winkel ist.

3. Befestigungsmittel nach einem der Ansprüche 1 oder 2, **dadurch gekennzeichnet, dass** die Mantelfläche des Schafts (101) zumindest teilweise eine reibungserhöhende Strukturierung aufweist.

4. Befestigungsmittel nach einem der Ansprüche 1 bis 3, **dadurch gekennzeichnet, dass** die Längserstreckung des Schafts (101) größer als die Längserstreckung des Halteabschnitts (112) ist.

5. Befestigungsmittel nach einem der Ansprüche 1 bis 4, **dadurch gekennzeichnet, dass** der Schaft eine Mindestlänge von 80 mm aufweist.

6. Befestigungsmittel nach einem der Ansprüche 1 bis 5, **dadurch gekennzeichnet, dass** der Halteabschnitt (112) endseitig als einseitig offener Haken ausgebildet ist.

7. Befestigungsmittel nach einem der Ansprüche 1 bis 6, **dadurch gekennzeichnet, dass** der Anschlag (111) als Platte ausgebildet ist.

8. Schallabsorber (200/205) aus zelligem elastomeren Schaumstoff, wobei in jeden Schallabsorber (200/205) mindestens ein Befestigungsmittel (100) nach einem oder mehreren der Ansprüche 1 bis 7 eingebracht ist.

9. Schallabsorbersystem umfassend
- mehrere Schallabsorber (200/205) aus zelligem elastomeren Schaumstoff, wobei in jeden Schallabsorber (200/205) mindestens ein Befestigungsmittel (100) nach einem oder mehreren der Ansprüche 1 bis 7 eingebracht ist und
- mindestens ein in einem Raum (305) aufgespanntes Seil (303/304), wobei der Halteabschnitt (112) jedes Befestigungsmittels (100) in ein Seil (303) oder eines der Seile (303/304) eingehängt ist.

10. Schallabsorbersystem umfassend
- mehrere Schallabsorber (200/205) aus zelligem elastomeren Schaumstoff, wobei in jeden Schallabsorber (200/205) mindestens ein erstes Befestigungsmittel (203) und mindestens ein zweites Befestigungsmittel (204) nach einem oder mehreren der Ansprüche 1 bis 7 eingebracht sind,
- mindestens ein Seilpaar (301/302) umfassend ein erstes und ein zweites Seil (303/304), die in einem Raum (305) parallel und im Abstand zueinander aufgespannt sind,
- wobei der Halteabschnitt (112) jedes ersten Befestigungsmittels (203) in das erste Seil (303) und der Halteabschnitt (112) jedes zweiten Befestigungsmittels (204) des Schallabsorbers (200/205) in das zweite Seil (304) eingehängt sind.

11. Schallabsorbersystem nach Anspruch 10, **dadurch gekennzeichnet, dass** das erste und zweite Seil (303/304) jedes Seilpaares (301/302) in einer horizontalen Ebene angeordnet sind.

12. Schallabsorbersystem nach einem der Ansprüche 9 bis 11, **dadurch gekennzeichnet, dass** der Schallabsorber (200/205) als Zylinder ausgebildet ist.

13. Schallabsorbersystem nach Anspruch 10, 11 und 12, **dadurch gekennzeichnet, dass** jedes erste Befestigungsmittel (203) in die Grundfläche (201) und jedes zweite Befestigungsmittel (204) in die Deckfläche (202) des Zylinders eingebracht sind.

14. Schallabsorbersystem nach einem der Ansprüche 9 bis 13, **dadurch gekennzeichnet, dass** die Längsachse (107) des Schaftes (101) jedes Befestigungsmittels (100) senkrecht zu einer Oberfläche (201/202) des Schallabsorbers (200/205) verläuft.

15. Schallabsorbersystem nach einem der Ansprüche 9 bis 14, **dadurch gekennzeichnet, dass** der Schallabsorber (201/205) ausschließlich aus einem zelligen elastomeren Schaumstoff besteht.

16. Schallabsorbersystem nach einem der Ansprüche 9 bis 15, **dadurch gekennzeichnet, dass** der Schallabsorber (200/205) aus einem Melaminharzschaumstoff mit einer Materialdichte im Bereich von 3 kg/m³ bis 15 kg/m³ und einer Stauchhärte im Bereich von 4 kPa bis 11 kPa besteht.

17. Schallabsorbersystem nach einem der Ansprüche 9 bis 15, **dadurch gekennzeichnet, dass** der Schallabsorber (200/205) aus einem PUR-Schaumstoff mit einer Materialdichte im Bereich von 16 kg/m³ bis 40 kg/m³ und einer Stauchhärte im Bereich von 1 kPa bis 14 kPa besteht.

## Claims

1. Fastening means (100) adapted for the suspension of sound absorbers (200/205) made of cellular elastomer foam, **characterized in that**
- the fastening means (100) has a cylindrical shaft (101) for anchoring the fastening means (100) in the cellular elastomer foam of the sound absorber (200/300),
- the shaft (101) tapers conically at one end (102) in the direction of a drive-in tip (103),
- at least one recess (105/106) is incorporated in the circumference of the shaft (101),
- the at least one recess (105/106) in each fastening means is adapted in such a manner that the cellular elastomer foam settles in the at least one recess as a result of restoring forces and thus the fastening means is anchored in the cellular elastomer foam,
- the fastening means (100) has a retaining section (112) for suspending the sound absorber, which is arranged at the other end (110) of the shaft (101),
- a stop (111) is arranged between the shaft (101) and the retaining section (112), which can be brought to abut against the surface of the sound absorber (200/205) and
- at least one fin (108/109) extends parallel to the longitudinal axis (107) of the shaft (101) radially outwards beyond its lateral surface.

2. The fastening means according to claim 1, **characterized in that** the opening angle (104) of the cone embracing the drive-in tip (103) is an acute angle.

3. The fastening means according to one of claims 1 or 2, **characterized in that** the lateral surface of the shaft (101) has a friction-enhancing structuring at least in part.

4. The fastening means according to one of claims 1 to 3, **characterized in that** the longitudinal extension of the shaft (101) is greater than the longitudinal extension of the retaining section (112).

5. The fastening means according to one of claims 1 to 4, **characterized in that** the shaft has a minimum length of 80 mm.

6. The fastening means according to one of claims 1 to 5, **characterized in that** the retaining section (112) is configured on one side as a hook which is open on one side.

7. The fastening means according to one of claims 1 to 6, **characterized in that** the stop (111) is configured as a plate.

8. Sound absorber (200/205) made of cellular elastomer foam, wherein in each sound absorber (200/205) at least one fastening means (100) according to one or more of claims 1 to 7 is incorporated.

9. Sound absorber system comprising
- a plurality of sound absorbers (200/205) made of cellular elastomer foam, wherein at least one fastening means (100) according to one or more of claims 1 to 7 is incorporated in each sound absorber (200/205) and
- at least one cable (303/304) spanned in a space (305), wherein the retaining section (112) of each fastening means (100) is suspended in a cable (303) or one of the cables (303/304).

10. The sound absorber system comprising
- a plurality of sound absorbers (200/205) made of cellular elastomer foam, wherein at least one first fastening means (203) and at least one second fastening means (204) according to one or more of claims 1 to 7 are incorporated in each sound absorber (200/205),
- at least one cable pair (301/302) comprising a first and a second cable (303/304) which are spanned in a space (305) parallel and at a distance from one another,
- wherein the retaining section (112) of each first fastening means (203) is suspended in the first cable (303) and the retaining section (112) of each second fastening means (204) of the sound absorber (200/205) is suspended in the second cable (304).

11. The sound absorber system according to claim 10, **characterized in that** the first and second cable (303/304) of each cable pair (301/302) are arranged in a horizontal plane.

12. The sound absorber system according to one of claims 9 to 11, **characterized in that** the sound absorber (200/205) is configured as a cylinder.

13. The sound absorber system according to claim 10, 11 and 12, **characterized in that** each first fastening means (203) is incorporated in the base surface (201) and each second fastening means (204) is incorporated in the top surface (202) of the cylinder.

14. The sound absorber system according to one of claims 9 to 13, **characterized in that** the longitudinal axis (107) of the shaft (101) of each fastening means (100) runs perpendicular to a surface (201/202) of the sound absorber (200/205).

15. The sound absorber system according to one of claims 9 to 14, **characterized in that** the sound absorber (201/205) exclusively consists of a cellular elastomer foam.

16. The sound absorber system according to one of claims 9 to 15, **characterized in that** the sound absorber (200/205) consists of a melamine resin foam having a material density in the range of 3 kg/m³ to 15 kg/m³ and a compression hardness in the range of 4 kPa to 11 kPa.

17. The sound absorber system according to one of claims 9 to 15, **characterized in that** the sound absorber (200/205) consists of a PUR foam having a material density in the range of 16 kg/m³ to 40 kg/m³ and a compression hardness in the range of 1 kPa to 14 kPa.

## Revendications

1. Moyen de fixation (100), aménagé pour accrocher des absorbants acoustiques (200/205) en mousse élastomère alvéolée, **caractérisé en ce que**
- le moyen de fixation (100) comporte une tige (101) cylindrique, destinée à l'ancrage du moyen de fixation dans la mousse élastomère alvéolée de l'absorbant acoustique (200/300),
- sur une extrémité (102), la tige (101) se rétrécit en forme conique dans la direction d'une pointe à enfoncer (103),
- sur la circonférence de la tige (101) est ménagé au moins un creux (105/106),
- dans chaque moyen de fixation, l'au moins un creux (105/106) est aménagé de telle sorte qu'en raison de forces de rappel, la mousse élastomère al véolée se place dans l'au moins un creux et ancre de ce fait le moyen de fixation dans la mousse élastomère alvéolée,
- le moyen de fixation (100) comporte un tronçon de retenue (112) pour l'accrochage de l'absorbant acoustique, qui est placé sur l'autre extrémité (110) de la tige (101)
- entre la tige (101) et le tronçon de retenue (112) est placée une butée (111) qui peut être amenée en appui sur la surface de l'absorbant acoustique (200/205) et
- au moins un aileron (108/109) s'étend vers l'extérieur, à la parallèle de l'axe longitudinal (107) de la tige (101) en direction radiale par-delà la surface d'enveloppe de celle-ci.

2. Moyen de fixation selon la revendication 1, **caractérisé en ce que** l'angle d'ouverture (104) du cône englobant la pointe à enfoncer (103) est un angle aigu.

3. Moyen de fixation selon l'une quelconque des revendications 1 ou 2, **caractérisé en ce que** la surface d'enveloppe de la tige (101) comporte au moins en partie une structuration augmentant la friction.

4. Moyen de fixation selon l'une quelconque des revendications 1 à 3, **caractérisé en ce que** l'extension longitudinale de la tige (101) est supérieure à l'extension longitudinale du tronçon de retenue (112).

5. Moyen de fixation selon l'une quelconque des revendications 1 à 4, **caractérisé en ce que** la tige présente une longueur minimale de 80 mm.

6. Moyen de fixation selon l'une quelconque des revendications 1 à 5, **caractérisé en ce que** sur le côté de son extrémité, le tronçon de retenue (112) est conçu sous la forme d'un crochet ouvert sur un côté.

7. Moyen de fixation selon l'une quelconque des revendications 1 à 6, **caractérisé en ce que** la butée (111) est conçue sous la forme d'une plaque.

8. Absorbant acoustique (200/205) en mousse élastomère alvéolée, dans chaque absorbant acoustique (200/205) étant introduit au moins un moyen de fixation (100) selon l'une quelconque ou plusieurs des revendications 1 à 7.

9. Système absorbant acoustique, comprenant :
- plusieurs absorbants acoustiques (200/205) en mousse élastomère alvéolée, dans chaque absorbant acoustique (200/205) étant introduit au moins un moyen de fixation (100) selon l'une quelconque ou plusieurs des revendications 1 à 7 et
- au moins un câble (303/304) tendu dans un espace (305), le tronçon de retenue (112) de chaque moyen de fixation (100) étant accroché dans un câble (303) ou dans l'un des câbles (303/304).

10. Système absorbant acoustique, comprenant
- plusieurs absorbants acoustiques (200/205) en mousse élastomère alvéolée, dans chaque absorbant acoustique (200/205) étant introduit au moins un premier moyen de fixation (203) et au moins un deuxième moyen de fixation (204) selon l'une quelconque ou plusieurs des revendications 1 à 7,
- au moins une paire de câbles (301/302), comprenant un premier et un deuxième câbles (303/304), qui sont tendus dans un espace (305) à la parallèle età une distance l'un de l'autre,
- le tronçon de retenue (112) de chaque premier moyen de fixation (203) étant accroché dans le premier câble (303) et le tronçon de retenue (112) de chaque deuxième moyen de fixation (204) de l'absorbant acoustique (200/205) étant accroché dans le deuxième câble (304).

11. Système absorbant acoustique selon la revendication 10, **caractérisé en ce que** le premier et le deuxième câbles (303/304) de chaque paire de câble (301/302) sont placés dans un plan parallèle.

12. Système absorbant acoustique selon l'une quelconque des revendications 9 à 11, **caractérisé en ce que** l'absorbant acoustique (200/205) est conçu sous la forme d'un cylindre.

13. Système absorbant acoustique selon la revendication 10, 11 et 12, **caractérisé en ce que** chaque premier moyen de fixation (203) est introduit dans la surface de fond inférieur (201) et chaque deuxième moyen de fixation (204) est introduit dans la surface de fond supérieur (202) du cylindre.

14. Système absorbant acoustique selon l'une quelconque des revendications 9 à 13, **caractérisé en ce que** l'axe longitudinal (107) de la tige (101) de chaque moyen de fixation (100) s'écoule à la perpendiculaire d'une surface (201/202) de l'absorbant acoustique (200/205).

15. Système absorbant acoustique selon l'une quelconque des revendications 9 à 14, **caractérisé en ce que** l'absorbant acoustique (201/205) est composé exclusivement d'une mousse élastomère alvéolée.

16. Système absorbant acoustique selon l'une quelconque des revendications 9 à 15, **caractérisé en ce que** l'absorbant acoustique (200/205) est composé d'une mousse en résine mélamine, d'une densité de matière dans l'ordre de 3 kg/m³ à 15 kg/m³ et d'une résistance à la compression de l'ordre de 4 kPa à 11 kPa.

17. Système absorbant acoustique selon l'une quelconque des revendications 9 à 15, **caractérisé en ce que** l'absorbant acoustique (200/205) est composé d'une mousse PUR, d'une densité de matière de l'ordre de 16 kg/m³ à 40 kg/m³ et d'une résistance à la compression de l'ordre de 1 kPa à 14 kPa.
